(19) Europäisches Patentamt
European Patent Office
Office européen des brevets

(11) **EP 3 340 096 B1**

(12) **FASCICULE DE BREVET EUROPEEN**

(45) Date de publication et mention
de la délivrance du brevet:
**07.08.2019 Bulletin 2019/32**

(51) Int Cl.:
*G06F 21/53* (2013.01)   *H04L 9/32* (2006.01)
*G06F 21/32* (2013.01)   *G06F 21/34* (2013.01)
*G06F 21/57* (2013.01)   *G06F 21/60* (2013.01)
*H04L 29/06* (2006.01)   *H04L 9/08* (2006.01)
*G06F 8/65* (2018.01)

(21) Numéro de dépôt: **17306850.3**

(22) Date de dépôt: **20.12.2017**

(54) **PROCÉDÉ DE CONFIGURATION D'UN PROGRAMME CRYPTOGRAPHIQUE DESTINÉ À ÊTRE EXÉCUTÉ PAR UN TERMINAL**

KONFIGURATIONSVERFAHREN EINES KRYPTOGRAPHISCHEN PROGRAMMS, DAS FÜR DIE AUSFÜHRUNG DURCH EIN ENDGERÄT BESTIMMT IST

METHOD FOR CONFIGURING A CRYPTOGRAPHIC PROGRAM INTENDED FOR BEING RUN BY A TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663001**

(43) Date de publication de la demande:
**27.06.2018 Bulletin 2018/26**

(73) Titulaire: **Idemia Identity & Security France
92400 Courbevoie (FR)**

(72) Inventeurs:
• **CHABANNE, Hervé**
**92130 Issy-Les-Moulineaux (FR)**
• **BRINGER, Julien**
**92130 Issy-Les-Moulineaux (FR)**

(74) Mandataire: **Regimbeau
20, rue de Chazelles
75847 Paris Cedex 17 (FR)**

(56) Documents cités:
• **VAN THANH DO ET AL: "Pervasive service access with SIM-based VPN", MOBILE ADHOC AND SENSOR SYSTEMS, 2009. MASS '09. IEEE 6TH INTERNATIONAL CONFERENCE ON, IEEE, PISCATAWAY, NJ, USA, 12 octobre 2009 (2009-10-12), pages 836-841, XP031569271, ISBN: 978-1-4244-5113-5**
• **MIHAI HULEA ET AL: "Fingerprint recognition distributed system", AUTOMATION, QUALITY AND TESTING, ROBOTICS, 2008. AQTR 2008. IEEE INTERNATIONAL CONFERENCE ON, IEEE, PISCATAWAY, NJ, USA, 22 mai 2008 (2008-05-22), pages 423-428, XP031298269, ISBN: 978-1-4244-2576-1**
• **Oleg Kolesnikov ET AL: "Building Linux Virtual Private Networks (VPNs)" In: "Building Linux Virtual Private Networks (VPNs)", 31 décembre 2002 (2002-12-31), Sams Publishing, XP055390595, ISBN: 978-1-57870-266-4 pages 23-25, * page 23, alinéa 2 * * page 25, alinéa 3 ***

EP 3 340 096 B1

## Description

### DOMAINE DE L'INVENTION

La présente invention concerne un procédé de configuration d'un programme cryptographique destiné à être exécuté par un terminal.

### ETAT DE LA TECHNIQUE

Un programme cryptographique utilise de façon conventionnelle des données ayant vocation à rester secrètes, par exemple une clé privée sous-jacente.

Certains programmes cryptographiques sont destinés à être exécutés dans des environnements agréés. Par exemple, un programme cryptographique ayant pour fonction la gestion de droits numériques (DRM) est censé n'être exécuté que sous l'environnement d'un utilisateur agréé.

Pour deviner les données secrètes d'un programme cryptographique, une attaque dite par « clonage » (« code lifting » en anglais) consiste à copier le programme vers un environnement non sécurisé sous le contrôle complet d'un attaquant. Dans un tel environnement non sécurisé, le programme forme ce qu'on appelle une « boîte blanche » : l'attaquant a accès non seulement aux données d'entrée et de sortie du programme, mais a également accès aux données intermédiaires calculées par le programme, et peut faire de l'ingénierie inverse pour déterminer les fonctions du programme.

Pour contrer une telle attaque, il est possible d'implémenter le programme cryptographique d'une façon telle que l'attaquant doive explorer un nombre très important de possibilités pour deviner les données secrètes. Ainsi, même si l'environnement d'exécution du programme est sous le contrôle complet de l'attaquant, ce dernier ne peut pas deviner les données secrètes du programme en un temps raisonnable. Une implémentation de programme suivant ce principe est communément appelé d'implémentation « en boîte blanche ».

Toutefois, une implémentation en « boîte blanche » peut s'avérer complexe et ne pas garantir un niveau de sécurité suffisant dans certaines applications.

Pour contrer une attaque par clonage avec un niveau de sécurisé amélioré, plusieurs solutions ont été proposées.

Une première solution, décrite dans le document US2016/0182472, consiste à mettre en oeuvre un programme cryptographique en partie par un terminal et en partie par une carte SIM.

Le fait de confier l'exécution d'une partie du programme à la carte SIM permet de faire dépendre les données de sortie du programme de la carte SIM, permettant ainsi de renforcer la sécurité du traitement cryptographique.

Cette solution présente toutefois comme inconvénient de ralentir l'exécution du programme cryptographique, la carte SIM disposant en effet de ressources matérielles limitées pour exécuter une partie du programme cryptographique.

Cette solution a par ailleurs comme autre inconvénient de devoir modifier le fonctionnement interne de la carte SIM, ce qui n'est souvent pas possible étant donné le fait que la configuration d'une carte SIM est généralement sous le contrôle exclusif de l'opérateur qui commercialise la carte SIM.

Enfin, une telle solution n'est pas efficacement protégée contre des attaques par rejeu.

Une deuxième solution, décrite dans le document US 9,264,899, consiste en un procédé de traitement cryptographique mis en oeuvre au moyen d'un programme cryptographique, le programme étant destiné à être exécuté par un terminal, le terminal étant en outre apte à communiquer avec une carte SIM, le procédé comprenant les étapes suivantes mises en oeuvre par le terminal:

- envoi, à la carte SIM, d'une commande d'exécution d'un traitement interne à l'élément sécurisé,
- réception d'une donnée de réponse propre à la carte SIM produite par le traitement interne exécuté par la carte SIM,
- vérification de la donnée de réponse, et exécution ou non-exécution du programme en fonction du résultat de la vérification.

Selon cette solution, le terminal prend en d'autres termes la décision d'exécuter ou pas le programme en fonction de la carte SIM.

Cette deuxième solution a cependant pour inconvénient de requérir le partage d'une donnée cryptographique entre la carte SIM et le terminal mobile, complexe de mise en oeuvre.

VAN THANH DO ET AL: "Pervasive service access with SIM-based VPN", 2009 IEEE 6th International Conférence on Mobile Adhoc and Sensor Systems, ISBN: 978-1-4244-5113-5, pages 836-841 (XP031569271) divulgue la modification de la clé utilisée par un programme VPN basé sur une réponse obtenue d'une carte SIM.

### EXPOSE DE L'INVENTION

Un but de l'invention est pallier les inconvénients de l'art antérieur

L'invention propose des procédés et un terminal tels que définis dans les revendications.

Il est dès lors proposé, selon un premier aspect de l'invention, un procédé de configuration d'un programme cryptographique destiné à être exécuté par un terminal, le procédé comprenant les étapes suivantes mises en oeuvre par le terminal:

- envoi à un élément sécurisé d'au moins une commande d'exécution d'un traitement interne par l'élément sécurisé,

- réception d'au moins une donnée de réponse produite par le traitement interne exécuté par l'élément sécurisé, la donnée de réponse étant propre à l'élément sécurisé,
- mise à jour du programme cryptographique d'après la donnée de réponse reçue, de sorte que des données de sortie produites par le programme cryptographique avant et après la mise à jour soient différentes.

Selon le procédé proposé, l'élément sécurisé n'est pas directement utilisé pour exécuter le programme cryptographique lui-même. La donnée de réponse qu'il fournit sert juste de paramètre de mise à jour du programme cryptographique. Comme la donnée de réponse est propre à l'élément sécurisé et imprévisible de l'extérieur, les données de sortie du programme cryptographique dépendent *in fine* de l'élément sécurisé, ce qui renforce la sécurité du programme cryptographique.

De plus, un terminal dispose de ressources matérielles bien supérieures à celles d'un élément sécurisé. Aussi, le programme cryptographique est exécuté par le terminal beaucoup plus rapidement que s'il était en partie exécuté par l'élément sécurisé.

En outre, comme les données de sortie fournies par le programme cryptographique changent une fois sa mise à jour effectuée, des attaques par rejeu sont rendues beaucoup plus difficiles.

Le procédé selon le premier aspect de l'invention peut être complété à l'aide des caractéristiques suivantes, prises seules ou en combinaison lorsque cela est techniquement possible.

La mise à jour du programme cryptographique peut comprendre la modification d'une table de correspondance destinée à être utilisée par le programme cryptographique.

La table de correspondance peut être destinée à être utilisée plusieurs fois par le programme cryptographique pour produire les données de sortie.

Le procédé peut en outre comprendre des étapes de :

- envoi à l'élément sécurisé d'un ensemble de premières données d'entrée de valeurs différentes pour le traitement interne,
- réception d'un ensemble de données de réponse propres à l'élément sécurisé, chaque donnée de réponse étant produite par une exécution du traitement interne prenant en entrée l'une des premières données d'entrée,
- génération de la table de correspondance modifiée à partir des données de réponse, de sorte qu'une utilisation par le programme cryptographique de la table de correspondance soit représentative d'un traitement comprenant le traitement interne.

Le terminal peut par ailleurs envoyer à l'élément sécurisé une deuxième donnée d'entrée dont la valeur est utilisée au cours de chacune des exécutions du traitement interne.

Le procédé peut comprendre en outre une étape de disjonction exclusive d'au moins une première portion de chaque donnée de réponse et d'une troisième donnée d'entrée de valeur constante, de sorte à produire un ensemble de données de sortie, la table de correspondance modifiée mettant en correspondance l'ensemble des données d'entrée et l'ensemble des données de sortie.

Il peut être prévu que les données d'entrée soient générées par un serveur et reçues par le terminal, et chaque donnée de sortie être transmise par le terminal au serveur.

Le traitement interne peut utiliser par ailleurs une clé secrète propre à l'élément sécurisé, et le serveur être en possession de la clé secrète.

La mise à jour du programme cryptographique peut comprendre en outre la modification d'au moins une fonction d'encodage externe destinée à être utilisée par le programme cryptographique.

La donnée de réponse peut comprendre une première portion et une deuxième portion, et dans lequel mise à jour du programme cryptographique comprend la modification, sur la base de la première portion, d'une table de correspondance destinée à être utilisée par le programme cryptographique, et la modification, sur la base de la deuxième portion, d'au moins une fonction d'encodage externe destinée à être utilisée également par le programme cryptographique.

Le programme cryptographique peut être mis à jour à chaque exécution du programme cryptographique par le terminal, ou bien chaque fois que le programme cryptographique a été exécuté un nombre prédéterminé de fois par le terminal.

L'élément sécurisé peut être une carte d'abonné à un réseau cellulaire, par exemple une carte SIM.

Il est également proposé, selon un deuxième aspect de l'invention, un procédé d'authentification d'un utilisateur auprès d'un terminal, le procédé comprenant les étapes suivantes:

- acquisition par le terminal de données d'épreuve, par exemple des données graphiques acquises par au moins un capteur biométrique,
- exécution par le terminal d'un programme cryptographique prenant en entrée les données d'épreuve acquises, de sorte à produire des données de données de sortie chiffrées,
- envoi des données de sortie chiffrées à un serveur configuré pour vérifier si les données d'épreuves correspondent à des données de référence prédéterminées,
- mise à jour du programme cryptographique au moyen du procédé selon le premier aspect de l'invention.

Il est par ailleurs proposé selon un troisième aspect de l'invention un produit programme d'ordinateur comprenant des instructions de code de programme pour l'exécution des étapes du procédé selon le premier aspect de l'invention pour configurer un programme cryptographique, lorsque ce procédé est exécuté par au moins un processeur, voir l'exécution des étapes du procédé d'authentification selon le deuxième aspect.

Il est en outre proposé selon un quatrième aspect de l'invention un terminal comprenant :

- un programme cryptographique configuré pour produire au moins une donnée de sortie, lorsque le programme cryptographique est exécuté par le terminal,

- une interface de communication avec un élément sécurisé configuré pour exécuter un traitement interne, l'interface de communication étant configurée pour :

    ◦ envoyer à l'élément sécurisé au moins une commande d'exécution du traitement interne par l'élément sécurisé,
    ◦ recevoir au moins une donnée de réponse produite par le traitement interne exécuté par l'élément sécurisé, la donnée de réponse étant propre à l'élément sécurisé,

- au moins un processeur configuré pour mettre à jour le programme cryptographique d'après la donnée de réponse reçue, de sorte que les données de sortie produites par le programme cryptographique avant et après la mise à jour soient différentes.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

- La figure 1 représente schématiquement un terminal selon un mode de réalisation de l'invention.
- La figure 2 montre un système d'authentification selon un mode de réalisation de l'invention.
- La figure 3 montre sous la forme d'un schéma-bloc un traitement interne mis en oeuvre par un élément sécurisé, selon un mode de réalisation.
- La figure 4 montre les étapes d'un procédé de mise à jour d'un programme cryptographique, selon un mode de réalisation de l'invention.
- La figure 5 montre les étapes d'un procédé d'authentification utilisant un programme cryptographique, selon un mode de réalisation de l'invention ?

Sur l'ensemble des figures, les éléments similaires portent des références identiques.

**DESCRIPTION DETAILLEE DE L'INVENTION**

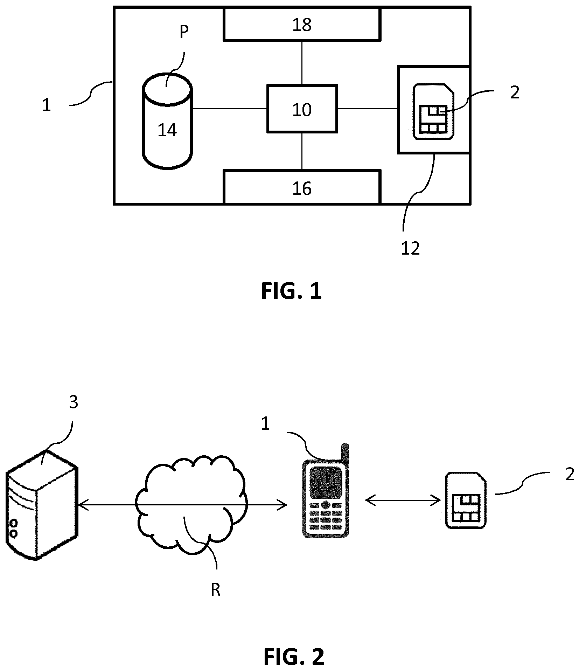

En référence à la **figure 1**, un terminal 1 comprend au moins un processeur 10 et une interface de communication 12 avec un élément sécurisé 2.

L'élément sécurisé 2 est un composant électronique amovible tel qu'une carte d'abonné à un réseau cellulaire (carte SIM).

L'interface de communication 12 comprend un logement pour recevoir l'élément sécurisé 2, et au moins un connecteur pour établir un canal de communication de données entre le processeur 10 et l'élément sécurisé 2, lorsque l'élément sécurisé est reçu dans le logement.

L'élément sécurisé 2 comprend un microprocesseur, processeur ou circuit configuré pour exécuter un traitement interne $F$ sur la base de données fournies par le terminal 1 via l'interface de communication 12 et retournant des données au terminal 1 via l'interface de communication 12. Le traitement interne $F$ utilise au moins une donnée secrète propre à l'élément sécurisé 2, cette donnée secrète étant inconnue du terminal 1.

Le terminal 1 comprend par ailleurs une mémoire 14 qui mémorise un programme cryptographique P, et un programme de mise à jour du programme cryptographique P.

Le processeur 10 du terminal 1 est adapté pour exécuter le programme cryptographique P et le programme de mise à jour. Le programme cryptographique P et le programme de mise à jour ne sont en revanche pas exécutés par l'élément sécurisé 2.

Le terminal 1 comprend en outre une interface d'acquisition 16 de données d'épreuve, tel qu'un capteur biométrique.

Le terminal 1 est par un exemple un terminal mobile : smartphone, téléphone, ordinateur portable, etc.

Le terminal 1 comprend par ailleurs une interface de communication 18 avec un serveur 3 distant, représenté en **figure 2**. L'interface de communication 18 avec le serveur 3 distant est par exemple adaptée pour se connecter à un réseau cellulaire R supporté par l'élément sécurisé 2.

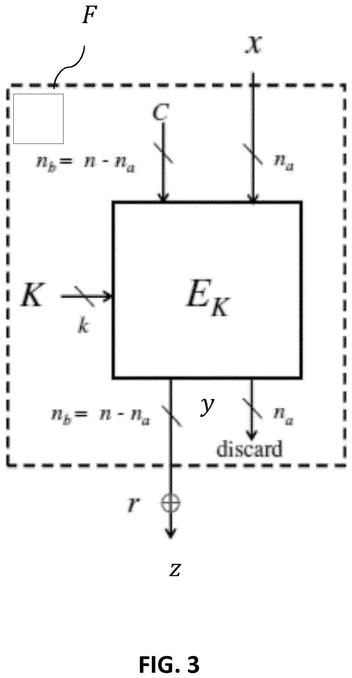

Est représenté sur la **figure 3** un mode de réalisation de traitement interne $F$ exécutable par l'élément sécurisé 2.

Le traitement $F$ prend en entrée : une première donnée d'entrée $x$ et une deuxième donnée d'entrée $c$.

La première donnée d'entrée $x$ est codée sur un nombre de bits prédéterminé égal à $n_a$.

La deuxième donnée d'entrée $c$ est codée sur un nombre de bits prédéterminé égal à $n_b$.

On pose $n = n_a + n_b$.

Le traitement interne $F$ utilise par ailleurs une clé secrète $K$ propre à l'élément sécurisé 2, et mémorisée par ce dernier. Cette clé $K$ n'est pas connue du terminal 1. En revanche, les valeurs des données d'entrée $x$ et $c$ r sont fournies par le terminal 1.

Le traitement interne $F$ comprend l'application d'une fonction $E_K$ qui calcule une donnée de réponse $y$

sur la base des données x, c et K.

La donnée de réponse y est codée sur $n = n_a + n_b$ bits. Cette donnée de réponse $y$ est constituée d'une première portion codée sur $n_b$ bits, dite portion utile, et d'une deuxième portion « discard » codée sur $n_a$ bits.

Par exemple, la fonction $E_K$ est par exemple une fonction de chiffrement par blocs de type AES ou l'algorithme A3A8 connu de l'homme du métier.

De préférence, il est choisi $n_a < n_b$. Ceci permet de réduire le nombre de valeurs d'entrée x possible traitables par le traitement F et de réduire conjointement le nombre de valeurs possibles pour la donnée z, en supposant que la valeur des paramètres c et r est fixée.

Le programme cryptographique P est un programme de chiffrement mettant en oeuvre $n$ tours de chiffrements, chaque tour de chiffrement comprenant la mise en oeuvre d'une fonction $F_{n_a}^r$ utilisant une table de correspondance $T(c,r,K)$ prédéterminée.

La table de correspondance $T(c,r,K)$ est représentative d'un traitement destiné à générer une donnée de sortie z à partir de la première donnée d'entrée x, ce traitement comprenant :

- le traitement interne F utilisant la clé K, la première donnée d'entrée x et la deuxième donnée d'entrée c,
- suivi d'une disjonction exclusive appliquée à la donnée de réponse y fournie par le traitement interne F et à une autre donnée r.

Autrement dit, la table de correspondance $T(c,r,K)$ met en correspondance un ensemble de valeurs possibles pour la donnée d'entrée x et un ensemble de valeurs possibles pour la donnée de sortie z.

Lorsque le programme cryptographique P utilise la table de correspondance $T(c,r,K)$, le programme cryptographique P peut déterminer, sur la base d'une donnée x ayant une valeur donnée, la valeur de donnée z qui serait calculée sur la base d'une donnée de réponse y fournie par l'élément sécurisé 2 par application du traitement interne F à ladite valeur de la donnée x, en utilisant les paramètres c et r.

La table $T(c,r,K)$ est pré-calculée et mémorisée dans la mémoire 14 du terminal 1 si bien que le programme cryptographique P n'a pas besoin de connaître directement la clé K propre à l'élément sécurisé 2 pour mettre en oeuvre un traitement équivalent au traitement interne F.

Lors d'une exécution du programme cryptographique P, la même table $T(c,r,K)$ est utilisée au cours chacun des n tours de chiffrement.

Par exemple, les tours de chiffrement sont implémentés de la manière décrite en partie 5.1 du document « White-box Cryptography Revisited: Space-Hard Ciphers » susmentionné.

Ce mode de réalisation constitue une implémentation « en boîte blanche », au sens où elle peut être mise en oeuvre dans un environnement constituant une

boîte blanche sans pour autant qu'un attaquant puisse remonter à des données secrètes manipulées par le programme cryptographique P (par exemple la clé K implicitement utilisée via la table de correspondance $T(c,r,K)$).

D'autres modes de réalisations sont toutefois utilisables par le programme cryptographique P, par exemple celui décrit dans le document « Efficient and provable White-Box Primitives », par Pierre-Alain Fouque et al. ou dans le document « Towards Practical Whitebox cryptography: Optimizing Efficiency and Space Hardness » par Andrey Bogdanov et al.

Le programme cryptographique P peut en outre comprendre au moins une fonction d'encodage externe utilisant une table d'encodage externe.

Le programme cryptographique P comprend par exemple une fonction d'encodage externe d'entrée utilisant une table d'entrée et/ou une fonction d'encodage externe de sortie utilisant une table de sortie, chacune de ces tables étant mémorisée dans la mémoire 14. On suppose dans la suite que chaque fonction d'encodage est paramétrable.

**Procédé de configuration du programme cryptographique**

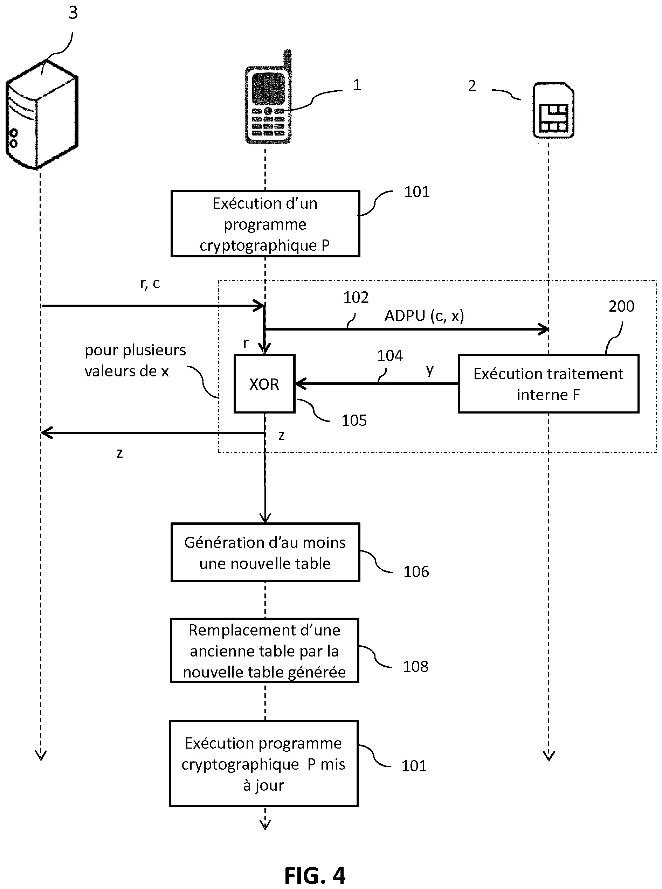

En référence à la **figure 4**, les étapes suivantes sont mises en oeuvre par le terminal 1 pour configurer dynamiquement le programme cryptographique P.

On suppose que la table $T(c_0,r_0,K)$ est mémorisée dans la mémoire 14 du terminal 1, c'est-à-dire une table pré-calculée sur la base des valeurs $c_0$ et $r_0$ pour les paramètres r et c.

Sont générées de nouvelles valeurs pour les paramètres r et c, nouvelles valeurs que l'on nomme $r_1$ et $c_1$. Ces valeurs sont par exemple générées par le serveur 3 et transmises au terminal 1.

Le processeur 10 du terminal 1 commande l'envoi d'une commande d'exécution du traitement interne F à l'élément sécurisé 2, par typiquement une commande au format ADPU (étape 102).

Par ailleurs, le processeur 10 commande l'envoi à l'élément sécurisé 2 la nouvelle valeur $c_1$, de sorte que cette valeur soit utilisée comme donnée d'entrée c par le traitement interne F.

La valeur $r_1$ est en outre mémorisée dans la mémoire 14 du terminal 1.

Le processeur 10 du terminal 1 détermine par ailleurs une première valeur pour la donnée d'entrée x. La donnée x étant codée sur $n_a$ bits, cette première valeur est choisie dans un ensemble de $2^{n_a}$ valeurs possibles pour cette donnée x. Par exemple, si $n_a = 8$, la donnée x ne peut prendre que 256 valeurs différentes (par exemple de 0 à 255).

Le processeur 10 commande l'envoi à l'élément sécurisé 2 de cette valeur choisie pour la donnée x au cours de l'étape 102.

Les différentes données d'entrée x, c transmises à l'élément sécurisé peut être transmises dans des messages séparés ou un même message.

En réponse à la réception de la commande et de ces données, l'élément sécurisé 2 met en oeuvre le traitement interne $F$ en utilisant comme données d'entrées la valeur $c_1$ pour la donnée $c$ et la valeur de $x$ envoyée par le terminal 1, et produit sur leur base une donnée de réponse $y$ ayant une certaine valeur (étape 200).

La valeur de la donnée de réponse $y$ dépend de la valeur $c_1$ pour le paramètres $c$ fournie par le terminal 1, et dépend également de la première valeur de la donnée $x$ également fournie par le terminal 1.

La valeur de cette donnée de réponse $y$ produite par l'élément sécurisé 2 dépend en outre de la clé secrète $K$ propre à l'élément sécurisé 2. La donnée de réponse $y$ est donc propre à l'élément sécurisé 2. En d'autres termes, le même traitement interne $F$ exécuté par plusieurs éléments sécurisés différents sur la base de la même valeur de donnée $x$ et des mêmes valeurs de paramètres $c$, $r$ produisent des données de réponse $y$ de valeurs différentes, puisque ces éléments sécurisés utilisent des clés secrètes $K$ de valeurs différentes.

La valeur de la donnée de réponse $y$ est retournée au terminal 1 via l'interface de communication 12 (étape 104).

Le terminal 1 calcule la disjonction exclusive (opérateur « XOR ») de la portion utile de la donnée $y$ codée sur $n_b$ bits et du paramètre $r$ préalablement fourni à l'élément de sorte à produire une première donnée de sortie $z$ (étape 105). Ce calcul améliore la sécurité du procédé.

L'opération de disjonction exclusive 105 peut être remplacée par une addition modulo la longueur des opérandes (cette opération forme un groupe).

Le processeur 10 choisit une deuxième valeur pour la donnée x parmi les $2^{n_a}$ valeurs possibles.

Le processeur 10 commande une deuxième exécution 200 par l'élément sécurisé 2 de la fonction interne $F$ sur la base de cette deuxième valeur, mais en réutilisant la même valeur $c_1$.

Cette deuxième exécution 200 retourne une deuxième valeur pour la donnée de réponse $y$, deuxième valeur qui est transmise 104 au terminal 1.

A nouveau, le terminal 1 calcule la disjonction exclusive de la portion utile de la donnée $y$ codée sur $n_b$ bits nouvellement reçue et de la valeur $r_1$, de sorte à produire une nouvelle donnée de sortie $z$ (étape 105).

L'étape 200 est répétée $2^{n_a}$ fois sur commande du terminal 1, de même que l'étape 105. A chaque fois, une valeur différente pour la donnée $x$ est passée en entrée du traitement interne $F$. Les valeurs $c_1$, $r_1$ pour les paramètres $c$ et $r$ sont en revanche les mêmes à chaque exécution du traitement interne $F$ et de la disjonction exclusive. Sont ainsi retournées au terminal 1 un ensemble de $2^{n_a}$ données de réponse $y$ de valeurs différentes et correspondant respectivement aux $2^{n_a}$ valeurs possibles pour la donnée d'entrée $x$, et sont générées en conséquence un ensemble de $2^{n_a}$ données de sortie $z$ de valeurs différentes et correspondant respectivement aux

$2^{n_a}$ valeurs possibles pour la donnée d'entrée $x$.

Il peut être prévu par exemple qu'une commande soit transmise par le terminal à 1 l'élément sécurisé 2 avec toutes les données d'entrée nécessaire pour que les $2^{n_a}$ appels au traitement interne $F$ soient mis en oeuvre simultanément.

Le processeur 10 met ensuite à jour le programme cryptographique P sur la base des données de sortie $z$ générées par le terminal.

La mise à jour est telle que des données de sortie produites par le programme cryptographique P, lors de son exécution par le processeur 10, sont différentes avant et après la mise à jour.

La mise à jour comprend les sous-étapes suivantes dans un mode de réalisation.

Le processeur 10 génère, sur la base des $2^{n_a}$ données de sortie $z$, une nouvelle table de correspondance $T(c_1,r_1,K)$ destinée à être utilisée par le programme cryptographique P, lorsque le programme cryptographique P est exécuté par le processeur 10 (étape 106).

Cette nouvelle table $T(c_1,r_1,K)$ met en correspondance deux ensembles : l'ensemble des $n_a$ valeurs de donnée $x$ passées au traitement interne $F$, et l'ensemble des $n_a$ données de sortie $z$ dépendant des données de réponse $y$ retournées par le traitement interne $F$. De la sorte, une utilisation par le programme cryptographique P de la nouvelle table de correspondance est représentative du traitement comprenant le traitement interne $F$ suivi d'une disjonction exclusive, sur la base des valeurs de paramètre $c_1$, $r_1$ et $K$.

Le processeur remplace la table de correspondance $T(c_0,r_0,K)$ jusqu'ici utilisée par le programme cryptographique P par la nouvelle table $T(c_1,r_1,K)$ qui vient d'être générée (étape 108). Ce remplacement peut typiquement être mis en oeuvre par écrasement dans la mémoire 14 des valeurs de l'ancienne table par les valeurs de la nouvelle table générée.

Par conséquent, la table $T(c_1,r_1,K)$, et celle-ci sera utilisée en lieu et place de la table $T(c_0,r_0,K)$ lors d'une exécution ultérieure au programme cryptographique P (étape 101).

Il n'est pas obligatoire de changer simultanément les valeurs des deux paramètres $c$ et $r$ pour mettre à jour le programme cryptographique P, conformément à l'exemple qui précède. Il est en effet possible de modifier la valeur d'un seul de ces paramètres, et de générer une nouvelle table sur la base de cette seule modification, par exemple générer la table $T(c_0,r_1,K)$ ou la table $T(c_1,r_0,K)$.

Comme indiqué précédemment, le programme cryptographique P est exécuté par le processeur 10 du terminal 1, mais pas par l'élément sécurisé 2 lui-même. L'élément sécurisé 2 n'a servi qu'à générer du matériel cryptographique utilisable ultérieurement par le terminal 1 seul. Ceci est avantageux pour plusieurs raisons.

Premièrement, l'élément sécurisé 2 est utilisé de façon très simple, en mettant à profit son traitement interne $F$ : le terminal 1 ne fait que contrôler les entrées et sortie de ce traitement interne. Le nombre d'appels $n_a$ au traitement interne $F$ est relativement faible, surtout lorsqu'il est choisi $n_a < n_b$ (256 appels dans le cas où $n_a$ = 8). Cette utilisation *a minima* de l'élément sécurisé 2 est donc beaucoup plus simple d'implémentation qu'un programme cryptographique P comprenant une partie exécutée par un terminal et une partie exécutée par un élément sécurisé, comme cela est proposé dans le document US2016/0182472.

Deuxièmement, l'élément sécurisé 2 dispose de ressources matérielles généralement beaucoup plus limitées que celles du terminal 1 (le processeur 10 étant notamment beaucoup plus rapide que le microprocesseur 10 exécutant le traitement interne dans l'élément sécurisé 2). Le programme cryptographique P est exécuté par le terminal 1 beaucoup plus rapidement que le programme cryptographique P décrit dans le dans le document US2016/0182472.

Troisièmement, le matériel cryptographique généré sur la base des données de réponse fournies par l'élément sécurisé 2 peut très bien être utilisé à plusieurs reprises par le terminal 1. C'est le cas par exemple du mode de réalisation précédemment décrit : la table de correspondance mise à jour est utilisée au cours de chaque tour de chiffrement du programme cryptographique P, et peut même être utilisée pour plusieurs exécutions du programme cryptographique P.

La mise à jour du programme cryptographique P peut être mise en oeuvre chaque fois que le programme cryptographique P a été exécuté un nombre prédéterminé de fois par le terminal 1, par exemple toutes les 10 exécutions du programme cryptographique P.

En particulier, la mise à jour du programme cryptographique P peut être mise en oeuvre pour chaque exécution du programme cryptographique P (avant ou après ladite exécution). Ceci confère un niveau de sécurité très élevé à un procédé utilisant le programme cryptographique P.

Le procédé de mise à jour selon le mode de réalisation jusqu'ici présenté a modifié les valeurs d'une table de correspondance utilisé par le programme cryptographique P.

Il peut en outre être généré au cours la mise à jour du programme cryptographique P au moins une nouvelle table d'encodage externe destinée à être utilisée par le programme cryptographique P. Ainsi, la mise à jour du programme cryptographique P modifie la table d'encodage externe utilisée par le programme cryptographique P au cours de son exécution par le terminal 1.

Avantageusement, la nouvelle table d'encodage externe est déterminée d'après au moins une des données « discard » produites préalablement par le traitement interne $F$ mais non utilisées pour générer les données de de sortie $z$. Ceci augmente les différences de comportement du programme cryptographique P avant et après mise à jour sans pour autant solliciter davantage l'élément sécurisé 2.

Est par exemple mise à jour une fonction d'encodage externe d'entrée du programme cryptographique P, c'est-à-dire une fonction d'encodage externe appliquée à des données d'entrée fournies au programme cryptographique P.

Alternativement, ou de façon complémentaire, est mise à jour une fonction d'encodage externe de sortie du programme cryptographique P, c'est-à-dire une fonction d'encodage externe qui produit les données de sortie du programme cryptographique P.

**Exemple d'application : procédé d'authentification**

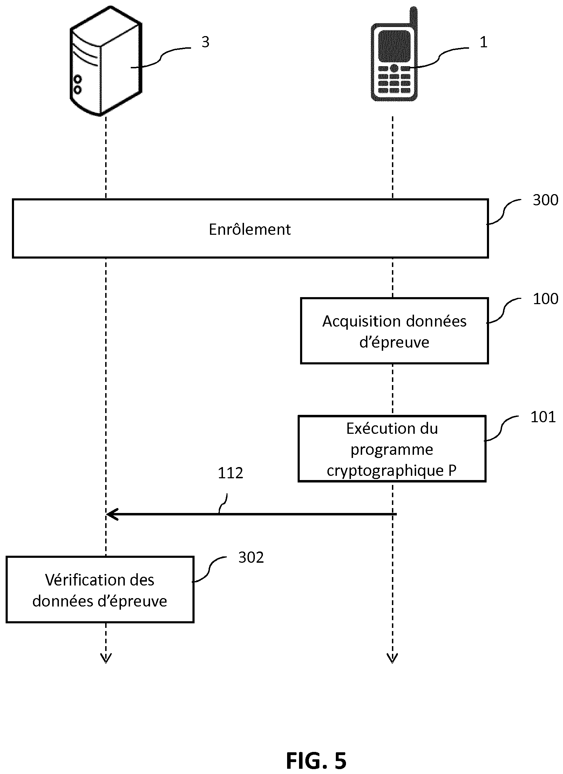

En référence à la **figure 5**, un procédé d'authentification utilisant le programme cryptographique P comprend les étapes suivantes.

Au cours d'une étape préalable d'enrôlement 300, des données secrètes de références propres à un utilisateur du terminal 1 sont mémorisées par le serveur 3.

Ultérieurement, un utilisateur souhaite s'authentifier auprès du terminal 1, en vue par exemple d'accéder à un service sécurisé du terminal 1 ou du serveur 3.

Pour cela, l'interface d'acquisition 16 acquiert des données d'épreuves de même type que les données secrètes de référence acquises au cours de l'enrôlement préalable (étape 100).

Par exemple, les données d'épreuve sont des données graphiques, voire des données vidéo, acquises par un capteur biométrique du terminal 1. Les données graphiques sont représentatives d'une partie du corps de l'utilisateur du terminal 1 (iris, empreinte digitale, etc.).

Les données d'épreuve sont chiffrées par le programme cryptographique P (étape 101).

Le programme cryptographique P génère ainsi des données de sortie (chiffrées) à partir des données d'épreuve acquises, en utilisant notamment au moyen la table de correspondance $T(c,r,K)$ se trouvant dans la mémoire 14.

Les données de sortie chiffrées sont transmises au serveur 3 (étape 112).

Le serveur 3 procède à une vérification des données d'épreuve (étape 302). Cette vérification comprend par exemple une comparaison entre les données chiffrées reçues par le serveur avec des données secrètes de références associées au terminal 1 et/ou de l'élément sécurisé 2. En fonction du résultat de la vérification, l'utilisateur du terminal 1 sera autorisé ou non à accéder au service demandé.

Le programme cryptographique P utilisé au cours de ce procédé d'authentification peut être mis à jour au moyen du procédé de mise à jour décrit précédemment. Si le programme cryptographique P est sollicité après avant sa mise à jour décrite précédemment, le chiffrement des données d'épreuve utilise la table de correspondance $T(c_0,r_0,K)$. Si le programme cryptographique P est sollicité après avant sa mise à jour décrite précédemment, le chiffrement des données d'épreuve utilise la table de correspondance $T(c_1,r_1,K)$. Dans les deux cas, les données de sortie du programme cryptographique P (c'est à dire les données chiffrées transmises au serveur 3) seront de valeurs différentes.

De préférence, les valeurs de paramètre $c$, $r$ fournies par le terminal 1 à l'élément sécurisé 2 dans le but de produire les données de réponse sont originellement choisies par le serveur 3, puis transmises au terminal 1, par exemple via un service de messagerie (SMS). Une telle génération peut être requise par le terminal 1 dans un message de requête émis par le terminal 1 au serveur 3.

Le procédé de configuration du programme cryptographique n'est pas limité aux modes de réalisation décrits précédemment ; il peut en effet faire l'objet d'autres variantes.

Il est par exemple possible de mémoriser plusieurs tables candidates dans la mémoire 14 du terminal, et de sélectionner l'une d'entre elles en fonction d'une donnée de réponse z fournie par l'élément sécurisé en vue de son utilisation par le programme cryptographique.

**Revendications**

1. Procédé de configuration d'un programme cryptographique (P) destiné à être exécuté (101) par un terminal (1), le procédé comprenant les étapes suivantes mises en oeuvre par le terminal (1):

   • envoi (102) à un élément sécurisé (2) d'au moins une commande d'exécution d'un traitement interne (F) par l'élément sécurisé (2),
   • réception (104) d'au moins une donnée de réponse (y) produite par le traitement interne (F) exécuté par l'élément sécurisé (2), la donnée de réponse (y) étant propre à l'élément sécurisé (2),
   • mise à jour (106, 108) du programme cryptographique (P) d'après la donnée de réponse (y) reçue, de sorte que des données de sortie produites par le programme cryptographique (P) avant et après la mise à jour soient différentes,

   **caractérisé en ce que** la donnée de réponse (y) comprend une première portion et une deuxième portion, et dans lequel la mise à jour du programme cryptographique (P) comprend la modification, sur la base de la première portion, d'une table de correspondance destinée à être utilisée par le programme cryptographique (P), et la modification, sur la base de la deuxième portion, d'au moins une fonction d'encodage externe destinée à être utilisée également par le programme cryptographique (P).

2. Procédé selon la revendication précédente, dans lequel la table de correspondance est destinée à être utilisée plusieurs fois par le programme cryptographique (P) pour produire les données de sortie.

3. Procédé selon l'une des revendications précédentes, comprenant des étapes de :

   • envoi (102) à l'élément sécurisé (2) d'un ensemble de premières données d'entrée (x) de valeurs différentes pour le traitement interne (F),
   • réception (104) d'un ensemble de données de réponse (y) propres à l'élément sécurisé (2), chaque donnée de réponse (y) étant produite par une exécution du traitement interne (F) prenant en entrée l'une des premières données d'entrée (x),
   • génération de la table de correspondance modifiée à partir des données de réponse (y), de sorte qu'une utilisation par le programme cryptographique (P) de la table de correspondance soit représentative d'un traitement comprenant le traitement interne (F).

4. Procédé selon la revendication précédente, dans lequel le terminal (1) envoie par ailleurs à l'élément sécurisé une deuxième donnée d'entrée (c) dont la valeur est utilisée au cours de chacune des exécutions du traitement interne (F).

5. Procédé selon l'une des revendications 3 à 4, comprenant en outre une étape de disjonction exclusive d'au moins une première portion de chaque donnée de réponse (y) et d'une troisième donnée d'entrée (r) de valeur constante, de sorte à produire un ensemble de données de sortie (z), la table de correspondance modifiée mettant en correspondance l'ensemble des données d'entrée (x) et l'ensemble des données de sortie (z).

6. Procédé selon l'une des revendications 3 à 5, dans lequel

   • les données d'entrée (x, c, r) sont générées par un serveur (3) et reçues par le terminal (1),
   • chaque donnée de sortie (z) est transmise par le terminal (1) au serveur (3).

7. Procédé selon la revendication précédente, dans lequel le traitement interne (F) utilise par ailleurs une clé secrète (K) propre à l'élément sécurisé (2), et dans lequel le serveur (3) est en possession de la clé secrète (K).

8. Procédé selon l'une des revendications précédentes, dans lequel l'étape de mise à jour (106, 108) du programme cryptographique (P) est mise en oeuvre à chaque exécution du programme cryptographique (P) par le terminal (1), ou bien chaque fois que le programme cryptographique (P) a été exécuté un nombre prédéterminé de fois par le terminal (1).

9. Procédé selon l'une des revendications précédentes, dans lequel l'élément sécurisé (2) est une carte d'abonné à un réseau cellulaire.

10. Procédé selon la revendication précédente, dans lequel la carte d'abonné à un réseau cellulaire est une carte SIM.

11. Procédé d'authentification d'un utilisateur auprès d'un terminal (1), le procédé comprenant les étapes suivantes:

• acquisition (100) par le terminal (1) de données d'épreuve, par exemple des données graphiques acquises par au moins un capteur biométrique,

• exécution (101) par le terminal (1) d'un programme cryptographique (P) prenant en entrée les données d'épreuve acquises, de sorte à produire des données de données de sortie chiffrées,

• envoi (112) des données de sortie chiffrées à un serveur (3) configuré pour vérifier si les données d'épreuves correspondent à des données de référence prédéterminées,

• mise à jour du programme cryptographique (P) au moyen du procédé selon l'une des revendications précédentes.

12. Produit programme d'ordinateur comprenant des instructions de code de programme pour l'exécution des étapes du procédé selon l'une des revendications précédentes pour configurer un programme cryptographique (P), lorsque ce procédé est exécuté par au moins un processeur (10).

13. Terminal (1) comprenant :

• un programme cryptographique (P) configuré pour produire au moins une donnée de sortie, lorsque le programme cryptographique (P) est exécuté par le terminal (1),

• une interface de communication (12) avec un élément sécurisé (2) configuré pour exécuter un traitement interne (F), l'interface de communication (12) étant configurée pour :

◦ envoyer à l'élément sécurisé (2) au moins une commande d'exécution du traitement interne (F) par l'élément sécurisé (2),
◦ recevoir au moins une donnée de réponse (y) produite par le traitement interne (F) exécuté par l'élément sécurisé (2), la donnée de réponse (y) étant propre à l'élément sécurisé (2),

• au moins un processeur (10) configuré pour mettre à jour le programme cryptographique (P) d'après la donnée de réponse (y) reçue, de sorte que les données de sortie produites par le programme cryptographique (P) avant et après la mise à jour soient différentes,

dans lequel la donnée de réponse (y) comprend une première portion et une deuxième portion, et dans lequel la mise à jour du programme cryptographique (P) comprend la modification, sur la base de la première portion, d'une table de correspondance destinée à être utilisée par le programme cryptographique (P), et la modification, sur la base de la deuxième portion, d'au moins une fonction d'encodage externe destinée à être utilisée également par le programme cryptographique (P).

**Patentansprüche**

1. Konfigurationsverfahren eines kryptographischen Programms (P), das für die Ausführung (101) durch ein Endgerät (1) bestimmt ist, wobei das Verfahren die folgenden Schritte umfasst, die durch das Endgerät (1) umgesetzt werden:

- Senden (102) an ein gesichertes Element (2) mindestens eines Ausführungsbefehls einer internen Bearbeitung (F) durch das gesicherte Element (2),
- Empfangen (104) mindestens eines Antwortdatums (y), das durch die interne Bearbeitung (F) erzeugt wird, die durch das gesicherte Element (2) ausgeführt wird, wobei das Antwortdatum (y) dem gesicherten Element (2) eigen ist,
- Aktualisieren (106, 108) des kryptographischen Programms (P) gemäß dem empfangenen Antwortdatum (y), sodass Ausgangsdaten, die durch das kryptographische Programm (P) erzeugt werden, vor und nach der Aktualisierung unterschiedlich sind,

**dadurch gekennzeichnet, dass** das Antwortdatum (y) einen ersten Abschnitt und einen zweiten Abschnitt umfasst, und wobei das Aktualisieren des kryptographischen Programms (P) das Ändern auf der Basis des ersten Abschnitts einer Entsprechungstabelle umfasst, die dazu bestimmt ist, von dem kryptographischen Programm (P) verwendet zu werden, und das Ändern auf der Basis des zweiten Abschnitts mindestens einer externen Codier-Funktion, die dazu bestimmt ist, ebenfalls von dem kryptographischen Programm (P) verwendet zu werden.

2. Verfahren nach dem vorstehenden Anspruch, wobei die Entsprechungstabelle dazu bestimmt ist, mehrmals von dem kryptographischen Programm (P) verwendet zu werden, um die Ausgangsdaten zu erzeugen.

3. Verfahren nach einem der vorstehenden Ansprüche, die folgenden Schritte umfassend:

    - Senden (102) an das gesicherte Element (2) eines Pakets erster Eingangsdaten (x) von unterschiedlichen Werten zur internen Bearbeitung (F),
    - Empfangen (104) eines Pakets von Antwortdaten (y), die dem gesicherten Element (2) eigen sind, wobei jedes Antwortdatum (y) durch eine Ausführung der internen Bearbeitung (F) erzeugt wird, die als Eingang eines der ersten Eingangsdaten (x) annimmt,
    - Generieren der geränderten Entsprechungstabelle aus den Antwortdaten (y), sodass eine Verwendung der Entsprechungstabelle durch das kryptographische Programm (P) repräsentativ für eine Bearbeitung ist, die die interne Bearbeitung (F) umfasst.

4. Verfahren nach dem vorstehenden Anspruch, wobei das Endgerät (1) dem gesicherten Element darüber hinaus ein zweites Eingangsdatum (c) sendet, dessen Wert im Laufe jeder der Ausführungen der internen Bearbeitung (F) verwendet wird.

5. Verfahren nach einem der Ansprüche 3 bis 4, weiter einen Schritt einer exklusiven Trennung mindestens eines ersten Abschnitts jedes Antwortdatums (y) und eines dritten Eingangsdatums (r) mit einem konstanten Wert umfasst, um ein Paket von Ausgangsdaten (z) zu erzeugen, wobei die geänderte Entsprechungstabelle das Paket der Eingangsdaten (x) und das Paket der Ausgangsdaten (z) zuordnet.

6. Verfahren nach einem der Ansprüche 3 bis 5, wobei

    - die Eingangsdaten (x, c, r) durch einen Server (3) generiert werden und durch das Endgerät (1) empfangen werden,
    - jedes Ausgangsdatum (z) durch das Endgerät (1) zu dem Server (3) übertragen wird.

7. Verfahren nach dem vorstehenden Anspruch, wobei die interne Bearbeitung (F) darüber hinaus einen Geheimschlüssel (K) verwendet, der dem gesicherten Element (2) eigen ist, und wobei der Server (3) in Besitz des Geheimschlüssels (K) ist.

8. Verfahren nach einem der vorstehenden Ansprüche, wobei der Schritt des Aktualisierens (106, 108) des kryptographischen Programms (P) bei jeder Ausführung des kryptographischen Programms (P) durch das Endgerät (1), oder aber jedes Mal, wenn das kryptographische Programm (P) eine vorbestimmte Anzahl von Malen durch das Endgerät (1) ausgeführt wird, umgesetzt wird.

9. Verfahren nach einem der vorstehenden Ansprüche, wobei das gesicherte Element (2) eine Abonnentenkarte für ein Mobilfunknetz ist.

10. Verfahren nach dem vorstehenden Anspruch, wobei die Abonnentenkarte für ein Mobilfunknetz eine SIM-Karte ist.

11. Verfahren zum Authentifizieren eines Benutzers an einem Endgerät (1), wobei das Verfahren die folgenden Schritte umfasst:

    - Erfassen (100) durch das Endgerät (1) von Prüfdaten, beispielsweise der grafischen Daten, die durch mindestens einen biometrischen Sensor erfasst werden,
    - Ausführen (101) durch das Endgerät (1) eines kryptographischen Programms (P), das als Eingang die erfassten Prüfdaten annimmt, um Daten von chiffrierten Ausgangsdaten zu erzeugen,
    - Senden (112) der chiffrierten Ausgangsdaten an einen Server (3), konfiguriert, um zu überprüfen, ob die Prüfdaten vorbestimmten Referenzdaten entsprechen,
    - Aktualisieren des kryptographischen Programms (P) anhand des Verfahrens nach einem der vorstehenden Ansprüche.

12. Computerprogrammprodukt, Programmcodeanweisungen zum Ausführen der Schritte des Verfahrens nach einem der vorstehenden Ansprüche zum Konfigurieren eines kryptographischen Programms (P) umfassend, wenn dieses Verfahren durch mindestens einen Prozessor (10) ausgeführt wird.

13. Endgerät (1), umfassend:

    - ein kryptographisches Programm (P), konfiguriert, um mindestens ein Ausgangsdatum zu erzeugen, wenn das kryptographische Programm (P) durch das Endgerät (1) ausgeführt wird,
    - eine Kommunikationsschnittstelle (12) mit einem gesicherten Element (2), konfiguriert, um eine interne Bearbeitung (F) auszuführen, wobei die Kommunikationsschnittstelle (12) konfiguriert ist, um:

        -- dem gesicherten Element (2) mindestens einen Ausführungsbefehl der internen Bearbeitung (F) durch das gesicherte Element (2) zu senden,
        -- mindestens ein Antwortdatum (y), das durch die interne Bearbeitung (F) erzeugt wird, die durch das gesicherte Element (2) ausgeführt wird, zu empfangen, wobei das Antwortdatum (y) dem gesicherten Element (2) eigen ist,

- mindestens einen Prozessor (10), konfiguriert, um das kryptographische Programm (P) gemäß dem empfangenen Antwortdatum (y) zu aktualisieren, sodass Ausgangsdaten, die durch das kryptographische Programm (P) erzeugt werden, vor und nach der Aktualisierung unterschiedlich sind,

wobei das Antwortdatum (y) einen ersten Abschnitt und einen zweiten Abschnitt umfasst, und wobei das Aktualisieren des kryptographischen Programms (P) das Ändern auf der Basis des ersten Abschnitts einer Entsprechungstabelle umfasst, die dazu bestimmt ist, von dem kryptographischen Programm (P) verwendet zu werden, und das Ändern auf der Basis des zweiten Abschnitts mindestens einer externen Codier-Funktion, die dazu bestimmt ist, ebenfalls von dem kryptographischen Programm (P) verwendet zu werden.

**Claims**

1. A method for configuring a cryptographic program (P) intended to be executed (101) by a terminal (1), the method comprising the following steps implemented by the terminal (1):

   • sending (102) to a secure element (2) at least one execution command of an internal processing (F) to be executed by the secure element (2),
   • receiving (104) at least one response datum (y) produced by the internal processing (F) executed by the secure element (2), the response datum (y) being specific to the secure element (2),
   • updating (106, 108) the cryptographic program (P) according to the received response datum (y), such that output data produced by the cryptographic program (P) before and after the updating are different,

   **characterized in that** the response datum (y) comprises a first portion and a second portion, and wherein the updating of the cryptographic program (P) comprises modification, on the basis of the first portion, of a correspondence table intended to be used by the cryptographic program (P), and modification, on the basis of the second portion, of at least one external encoding function intended to be used also by the cryptographic program (P).

2. The method according to the preceding claim, wherein the correspondence table is intended to be used several times by the cryptographic program (P) to produce the output data.

3. The method according to one of the preceding claims, comprising steps of:

   • sending (102) to the secure element (2) a set of first input data (x) of different values for the internal processing (F),
   • receiving (104) a set of response data (y) specific to the secure element (2), each response datum (y) being produced by execution of the internal processing (F) taking as input one of the first input data (x),
   • generating the correspondence table modified from the response data (y), such that use by the cryptographic program (P) of the correspondence table is representative of processing comprising the internal processing (F).

4. The method according to the preceding claim, wherein the terminal (1) further sends to the secure element a second input datum (c) whereof the value is used during each of the executions of the internal processing (F).

5. The method according to one of claims 3 or 4, further comprising a step of exclusive disjunction of at least one first portion of each response datum (y) and of a third input datum (r) of constant value, so as to produce a set of output data (z), the modified correspondence table mapping all of the input data (x) and all of the output data (z).

6. The method according to one of claims 3 to 5, wherein

   • the input data (x, c, r) are generated by a server (3) and received by the terminal (1),
   • each output datum (z) is transmitted by the terminal (1) to the server (3).

7. The method according to the preceding claim, wherein the internal processing (F) further uses a secret key (K) specific to the secure element (2), and wherein the server (3) is in possession of the secret key (K).

8. The method according to one of the preceding claims, wherein the step of updating (106, 108) the cryptographic program (P) is implemented for each execution of the cryptographic program (P) by the terminal (1), or else each time the cryptographic program (P) has been executed a predetermined number of times by the terminal (1).

9. The method according to one of the preceding claims, wherein the secure element (2) is a subscriber card to a cellular network.

10. The method according to the preceding claim, wherein the subscriber card to a cellular network is a SIM card.

**11.** A method for authenticating a user on a terminal (1), the method comprising the following steps of:

• acquiring (100) proof data by the terminal (1), for example graphic data acquired by at least one biometric sensor,
• executing (101) by the terminal (1) a cryptographic program (P) taking as input the acquired proof data, so as to produce data of encrypted output data,
• sending (112) the encrypted output data to a server (3) configured to verify if the proof data correspond to predetermined reference data,
• updating the cryptographic program (P) by means of the method according to one of the preceding claims.

**12.** A computer program product comprising program code instructions for executing the steps of the method according to one of the preceding claims for configuring a cryptographic program (P), when this method is executed by at least one processor (10).

**13.** A terminal (1) comprising:

• a cryptographic program (P) configured to produce at least one output datum, when the cryptographic program (P) is executed by the terminal (1),
• a communication interface (12) with a secure element (2) configured to execute internal processing (F), the communication interface (12) being configured for:

◦ sending to the secure element (2) at least one execution command of the internal processing (F) by the secure element (2),
◦ receiving at least one response datum (y) produced by the internal processing (F) executed by the secure element (2), the response datum (y) being specific to the secure element (2),

• at least one processor (10) configured to update the cryptographic program (P) according to the received response datum (y), such that the output data produced by the cryptographic program (P) before and after the updating are different,

wherein the response datum (y) comprises a first portion and a second portion, and wherein the updating of the cryptographic program (P) comprises modification, on the basis of the first portion, of a correspondence table intended to be used by the cryptographic program (P), and modification, on the basis of the second portion, of at least one external encoding function intended to be used also by the cryptographic program (P).

**FIG. 1**

**FIG. 2**

FIG. 3

Exécution d'un programme cryptographique P — 101

r, c

102

ADPU (c, x) — 200

pour plusieurs valeurs de x

r

XOR

104

y

Exécution traitement interne F

105

z

z

Génération d'au moins une nouvelle table — 106

Remplacement d'une ancienne table par la nouvelle table générée — 108

Exécution programme cryptographique P mis à jour — 101

## FIG. 4

Enrôlement — 300

Acquisition données d'épreuve — 100

Exécution du programme cryptographique P — 101

112

Vérification des données d'épreuve — 302

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160182472 A

- US 9264899 B

**Littérature non-brevet citée dans la description**

- **VAN THANH DO et al.** Pervasive service access with SIM-based VPN. *2009 IEEE 6th International Conférence on Mobile Adhoc and Sensor Systems,* ISBN 978-1-4244-5113-5, 836-841

- **PIERRE-ALAIN FOUQUE.** *Efficient and provable White-Box Primitives*
- **ANDREY BOGDANOV.** *Towards Practical Whitebox cryptography: Optimizing Efficiency and Space Hardness*